(19) **Europäisches Patentamt / European Patent Office / Office européen des brevets**

(11) **EP 4 557 064 A1**

(12) **EUROPEAN PATENT APPLICATION**
published in accordance with Art. 153(4) EPC

(43) Date of publication:
**21.05.2025 Bulletin 2025/21**

(21) Application number: **23838427.5**

(22) Date of filing: **07.03.2023**

(51) International Patent Classification (IPC):
**G06F 3/044** (2006.01)

(86) International application number:
**PCT/CN2023/080180**

(87) International publication number:
**WO 2024/011925 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 14.07.2022 CN 202221826258 U
14.07.2022 CN 202210834565
26.09.2022 CN 202211177198
26.09.2022 CN 202222548620 U

(71) Applicant: **Focaltech Electronics (Shenzhen) Co., Ltd.**
**Shenzhen, Guangdong 518054 (CN)**

(72) Inventors:
• HOU, Weijing
  **Shenzhen, Guangdong 518054 (CN)**
• CHEN, Jianwu
  **Shenzhen, Guangdong 518054 (CN)**
• LIU, Hui
  **Shenzhen, Guangdong 518054 (CN)**

(74) Representative: **Zaboliene, Reda**
**Metida**
**Business center Vertas**
**Gyneju str. 16**
**01109 Vilnius (LT)**

(54) **MUTUAL-CAPACITIVE TOUCH-CONTROL SCREEN, AND TOUCH-CONTROL APPARATUS HAVING MUTUAL-CAPACITIVE TOUCH-CONTROL SCREEN**

(57) A mutual capacitive touch-control screen and a touch-control device are provided, the a mutual capacitive touch-control screen includes a first dielectric layer including a first surface and a second surface arranged opposite to each other; a first electrode unit arranged on the first surface; and a second electrode unit arranged on the second surface and cooperated with the first electrode unit to form a coupling mutual capacitance; the first electrode unit includes a first state and a second state, in the first state, the first electrode unit and the second electrode unit form a combination of driving electrode and receiving electrode, and a coordinate of a touch point is obtained by detecting the coupling mutual capacitance between the first electrode unit and the second electrode unit; in the second state, the first electrode unit and the second electrode unit form a resonance circuit.

Fig. 1

## Description

The subject matter herein generally relates to a technology field of touch-control screens, and particularly to a mutual capacitive touch-control screen and a touch-control device with the same.

## BACKGROUND

Smart devices such as smart phones, notebook computers, and smart watches are widely used, the smart devices provide more and more functions, but a size of a smart device is required to be more and more compact at the same time. These two trends contradict each other, the size of the smart devices may affect the number of functions of the smart devices.

Human-machine interactions of smart devices are mainly realized through a touch-control screen, the touch-control screen usually occupies a large area and volume of the smart device, but only provides a touch function. For example, a mutual capacitive touch-control screen usually includes a number of driving electrodes and receiving electrodes, which are used to form a mutual capacitance, and detection of the touch position can thus be achieved. However, electromagnetic resonance inside the current mutual capacitive touch-control screen cannot be provided, and the transfer of energy with the existing components cannot be realized.

## SUMMARY

In view of this, it is necessary to provide a mutual capacitive touch-control screen and a touch-control device with the mutual capacitive touch-control screen, which can not only realize a detection function on common touch positions, but also provide electromagnetic resonance, to achieve a function of energy transfer.

In a first aspect, a mutual capacitive touch-control screen is provided, the mutual capacitive touch-control screen includes: a first dielectric layer comprising a first surface and a second surface, the first surface and the second surface being arranged opposite to each other; a first electrode unit arranged on the first surface of the first dielectric layer; and a second electrode unit arranged on the second surface of the first dielectric layer and cooperated with the first electrode unit to form a coupling mutual capacitance; the first electrode unit comprises a first state and a second state, when the first electrode unit is in the first state, the first electrode unit and the second electrode unit form a combination of driving electrode and receiving electrode, and a coordinate of a touch point is obtained by detecting the coupling mutual capacitance between the first electrode unit and the second electrode unit; when the first electrode unit is in the second state, the first electrode unit and the second electrode unit form a resonance circuit.

According to the first aspect, in a possible implementation, the first electrode unit includes a first end and a second end; when excitation signals are applied to the first end and the second end, the first electrode unit is in the first state; when the excitation signals are applied to the first end or the second end, the first electrode unit is in the second state.

According to the first aspect, in a possible implementation, when the first electrode unit is in the first state, an equivalent capacitance is formed at each overlapping position between a projection of the first electrode unit on the first dielectric layer and a projection of the second electrode unit on the first dielectric layer, the first electrode unit forms an equivalent inductance, the resonance circuit is formed by a plurality of equivalent capacitances being in parallel with the equivalent inductance.

According to the first aspect, in a possible implementation, the first electrode unit comprises a first electrode and a second electrode, a switch is arranged between the first electrode and the second electrode, the first electrode is connected or disconnected with the second electrode by the switch.

According to the first aspect, in a possible implementation, the first electrode extends in a direction around a center point, and is arranged in a rectangular shape, the second electrode unit includes a plurality of strip electrodes.

According to the first aspect, in a possible implementation, the first electrode unit is in a spiral shape, the second electrode unit includes a plurality of azimuth electrodes, and each of the plurality of azimuth electrodes is in a shape of whole block.

According to the first aspect, in a possible implementation, the first electrode unit is in a concentric circle shape, the azimuth electrode is in a fan shape, and extends along a radial direction of a circumference.

According to the first aspect, in a possible implementation, the first electrode unit is in a concentric circle shape, and an edge of the azimuth electrode is in a jagged shape.

According to the first aspect, in a possible implementation, the azimuth electrode defines a plurality of openings and slots.

According to the first aspect, in a possible implementation, the strip electrode is axisymmetric with a center line as an axis of symmetry, and shaped as two letters "H" joined at one side, opposite two sides of the strip electrode each defines openings, directions of the openings of the plurality of strip electrodes are the same.

According to the first aspect, in a possible implementation, the mutual capacitive touch-control screen further includes: a bottom coil layer group formed by a bottom dielectric layer and a bottom charging coil; the mutual capacitive touch-control screen forms a stacked structure of the second electrode unit, the first dielectric layer, the first electrode unit, the bottom dielectric layer, and the bottom charging coil, the bottom dielectric layer defines at least one bottom through hole, and the first electrode unit is connected with the bottom charging coil through the bottom through hole.

According to the first aspect, in a possible implementation, the mutual capacitive touch-control screen further includes: at least one middle coil layer group comprising a middle dielectric layer and a middle charging coil; the middle coil layer group is arranged between the first electrode unit and the bottom coil layer group, the middle dielectric layer in each middle coil layer group is arranged above the middle charging coil; each middle dielectric layer defines at least one middle through hole, and the first electrode unit is connected with the middle charging coil and the bottom charging coil through the middle through hole and the bottom through hole.

According to the first aspect, in a possible implementation, the mutual capacitive touch-control screen further includes: a circuit layer group comprising a circuit dielectric layer and a first wiring; the circuit dielectric layer is arranged above the first wiring, the circuit layer group and the bottom coil layer group is adjacent, and the circuit layer is arranged above the bottom coil layer; the first wiring is connected with the first electrode unit and/or the second electrode unit.

According to the first aspect, in a possible implementation, the bottom coil layer group further includes a second wiring, and the second wiring is arranged on a same layer as the bottom charging coil; the second wiring is connected with the first electrode unit and/or the second electrode unit.

According to the first aspect, in a possible implementation, the second electrode unit, the first dielectric layer, the first electrode unit, the middle coil layer group, and the bottom coil layer group are integrated in a printed circuit board.

According to the first aspect, in a possible implementation, the mutual capacitive touch-control screen further includes: a cover plate arranged on a side of the second electrode unit that is far away from the first dielectric layer.

In a second aspect, a touch-control device is further provided, the touch-control device includes a driver chip; and the mutual capacitive touch-control screen electrically connected with the driving chip.

According to the second aspect, in a possible implementation, the touch-control device dynamically switches a resonant circuit formed by a first electrode unit and a second electrode unit to a preset frequency point, and transmits or receives energy with an external device at a same frequency point.

According to the second aspect, in a possible implementation, the first electrode unit includes a plurality of electrodes, the touch-control device sets different electrodes in the first electrode unit at different frequency points, and transmits or receives the energy with the external device corresponding to the different frequency points at the same time.

According to the second aspect, in a possible implementation, the first electrode unit and the second electrode unit in a preset area of the mutual capacitive touch-control screen form the resonant circuit.

According to the second aspect, in a possible implementation, the driver chip includes a touch driver chip, a wireless control chip, and a plurality of switches, a first end of each of the plurality of switches is connected with the first electrode unit, a second end of each of the plurality of switches is connected with the touch driving chip, and a third end of each of the plurality of switches is connected with the wireless control chip, a first state and a second state of the first electrode unit are switched by each of the plurality of switches.

Compared with the prior art, the present disclosure at least has the following beneficial effects:
by configuring the first electrode unit in different configuration states, that is, the resonant circuit is formed with the second electrode unit in the first state, a frequency selection function of the mutual capacitive touch-control screen can be realized. The touch-control device can dynamically switch the resonant circuit including the first electrode unit and the second electrode unit to a preset frequency point, so as to transmit or receive energy with an external device at the same frequency point. Further, by configuring different electrodes in the first electrode unit at different frequency points, the touch-control device can simultaneously transmit energy or receive energy with the external device corresponding to different frequency points, and the external device transmits energy and receives energy at the same time. In the second state, the first electrode unit and the second electrode unit constitute the combination of the driving electrode and the receiving electrode, to realize the detection function on the common touch positions. In this way, the touch position detection and energy transfer are realized at the same time.

BRIEF DESCRIPTION OF THE DRAWINGS

FIG. 1 is a schematic structural view of an embodiment of a mutual capacitive touch-control screen according to the present disclosure.
FIG. 2 is a schematic structural view of an embodiment of a first electrode unit in the mutual capacitive touch-control screen in FIG. 1 according to the present disclosure.
FIG. 3 is a schematic structural view of an embodiment of a second electrode unit in the mutual capacitive touch-control screen in FIG. 1 according to the present disclosure.
FIG. 4 is a schematic view of an embodiment of the first electrode unit and the second electrode unit when overlapped in the mutual capacitive touch-control screen in FIG. 1 according to the present disclosure.
FIG. 5 is a schematic view of an embodiment of the first electrode unit in a first state of the mutual capacitive touch-control screen in FIG. 1 according to the present disclosure.

FIG. 6 is a schematic view of an embodiment of a parallel resonant circuit formed by the first electrode unit and the second electrode unit in the mutual capacitive touch-control screen in FIG. 1 according to the present disclosure.

FIG. 7 is a schematic view of the first electrode unit in a second state of the mutual capacitive touch-control screen in FIG. 1 according to the present disclosure.

FIG. 8 is another schematic structural view of a mutual capacitive touch-control screen according to the present disclosure.

FIG. 9 is a schematic structural view of the first electrode unit in the mutual capacitive touch-control screen in FIG. 8 according to the present disclosure.

FIG. 10 is a schematic structural view of the second electrode unit in the mutual capacitive touch-control screen in FIG. 8 according to the present disclosure.

FIG. 11 is another schematic structural view of a mutual capacitive touch-control screen according to the present disclosure.

FIG. 12 is a schematic structural view of the second electrode unit in the mutual capacitive touch-control screen in FIG. 11 according to the present disclosure.

FIG. 13 is a schematic structural view of a second electrode unit according to the present disclosure.

FIG. 14 is another schematic structural view of a mutual capacitive touch-control screen according to the present disclosure.

FIG. 15 is another schematic structural view of a mutual capacitive touch-control screen according to the present disclosure.

FIG. 16 is a schematic structural view of a touch-control device according to the present disclosure.

The present disclosure is further illustrated according to the following detailed description and the above drawings.

## DETAILED DESCRIPTION

In order to understand the above purposes, features, and advantages of the present disclosure more clearly, the present disclosure is described in detail in combination with the attached drawings and specific embodiments. It should be noted that, without conflict, the embodiments of the present disclosure and the features in the embodiments may be combined with each other.

Many specific details are set forth in the following description to facilitate a full understanding of the present disclosure, and the embodiments described are only part of the embodiments of the present disclosure, not all of them. Based on the embodiments of the present disclosure, all other embodiments obtained by those of ordinary skills in the art without making creative labor fall within the scope of protection of the present disclosure.

Unless otherwise defined, technical terms or scientific terms used in the embodiments shall have common meanings as construed by those of ordinary skills in the art to which the present disclosure pertains. The terms used in the specification of the present disclosure is only for the purpose of describing specific embodiments and is not intended to limit the present disclosure.

Embodiment 1:

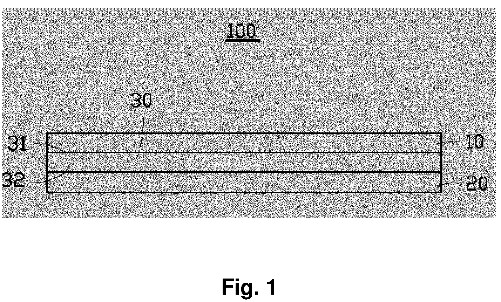

Referring to FIG. 1, a mutual capacitive touch-control screen 100 is illustrated. The mutual capacitive touch-control screen 100 includes a first dielectric layer 30, a first electrode unit 10, and a second electrode unit 20.

It can be understood that the first dielectric layer 30 may be one of film, glass, plastic, printed circuit board (PCB), or other materials, which are not limited here.

The first dielectric layer 30 includes a first surface 31 and a second surface 32, the first surface 31 and the second surface 32 are arranged opposite to each other. The first electrode unit 10 and the second electrode unit 20 are arranged on opposite sides of the first dielectric layer 30. For example, the first electrode unit 10 is arranged on the first surface 31, and the second electrode unit 20 is arranged on the second surface 32.

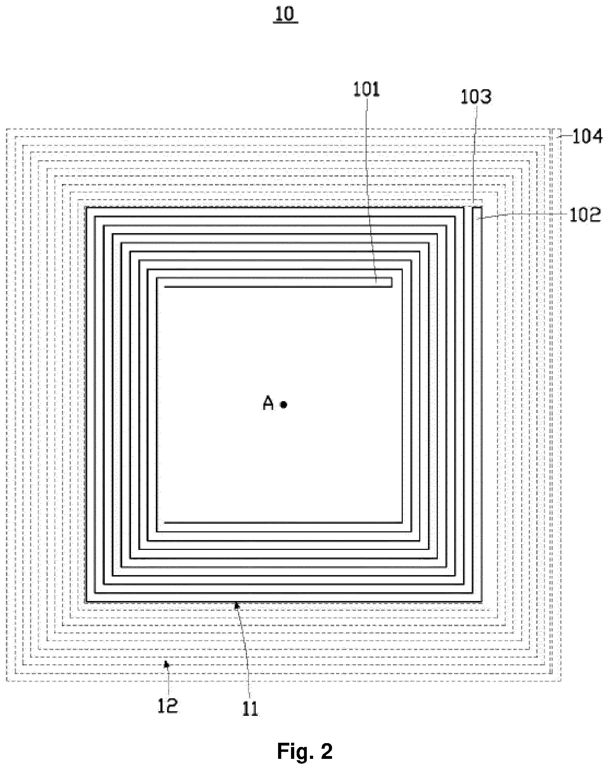

Referring to FIG. 2, the first electrode unit 10 is illustrated. The first electrode unit 10 extends in a certain direction from the inside to the outside or from the outside to the inside around a certain center point, and is arranged in a certain shape on the first dielectric layer 30. For example, the first electrode unit 10 extends in an anticlockwise direction from one end to the other end around a center point A from the inside to the outside, and its overall shape on the first dielectric layer 30 is rectangular.

In one embodiment, the first electrode unit 10 includes a first electrode 11 and a second electrode 12. The first electrode 11 is connected with the second electrode 12. The first electrode 11 includes a first end 101 and a second end 102, the second electrode 12 includes a third end 103 and a fourth end 104. The second end 102 is further connected with the third end 103, the first electrode 11 and the second electrode 12 are connected with each other to form a whole. In some embodiments, the first electrode 11 extends from the first end 101 to the second end 102 around the center point A in the anticlockwise direction from the inside to the outside, and is rectangular in overall shape on the first dielectric layer 30. The third end 103 of the second electrode 12 is connected with the second end 102 of the first electrode 11, and proceeds anticlockwise, extending to the fourth end 104 around the first electrode 11 and the center point A from the inside to the outside, and with an overall rectangular shape on the first dielectric layer 30.

In one embodiment, a switch (not shown in the figures) is further provided between the second end 102 and the third end 103, and the first electrode unit 10 can trigger the first electrode 11 to be connected with the second electrode 12 by turning on the switch, or trigger the first electrode 11 to be disconnected with the second electrode 12 by turning off the switch.

It can be understood that, in other embodiments, the first electrode unit 10 may also include more other electrodes that are similar in structure to the first electrode 11 and the second electrode 12, such other electrodes being arranged around the periphery of the first electrode 11.

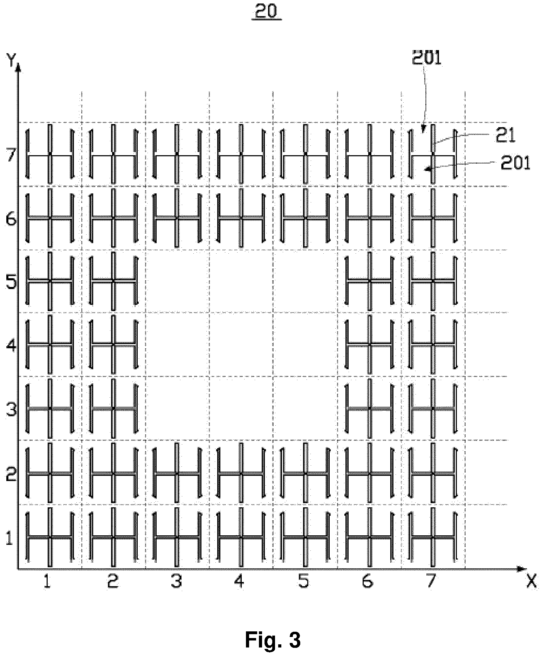

Referring to FIG. 3, the second electrode unit 20 is illustrated. The second electrode unit 20 includes a number of strip electrodes 21. A number of strip electrodes 21 are arranged on the first dielectric layer 30 to form an array matrix, there are no strip electrodes arranged at the center of the array matrix. In detail, an XY-axis coordinate system as shown in FIG. 3 is established, each strip electrode 21 is located in a coordinate cell. There is no strip electrode 21 provided in the coordinate cells located in the middle position.

It can be understood that, the number of strip electrodes 21 of the second electrode unit 20 and the number of coordinate cells without strip electrodes 21 can be preset according to actual requirements. For example, there is no strip electrode 21 provided in 1, 4, or 9 coordinate cells located in the middle position. For example, there are 7*7=49 coordinate cells as in FIG. 3, there is no strip electrode 21 provided in the 9 coordinate cells located in the middle position, that is, the second electrode unit 20 includes a total of 40 strip electrodes 21.

In one embodiment, each strip electrode 21 is axisymmetric with a center line (not marked in the figures) as the axis of symmetry. The strip electrode 21 is, for example, shaped as two letters "H" joined at one side. The top and the bottom of the strip electrode 21 define openings 201. The openings 201 of the number of strip electrodes 21 are all arranged vertically up or down, for example, arranged along the Y-axis direction in FIG. 3.

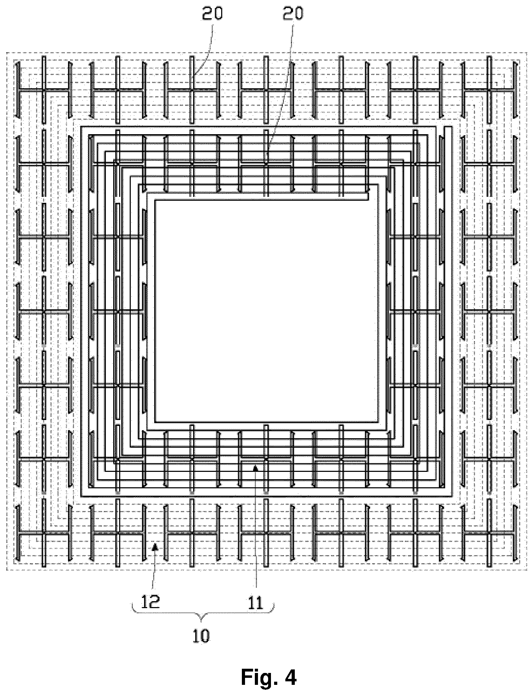

Referring to FIG. 4, cooperation of the first electrode unit 10 with the second electrode unit 20 is illustrated. The projection of the first electrode unit 10 and the second electrode unit 20 on the first dielectric layer 30 (as shown in FIG. 1) overlaps. In detail, the projection of the strip electrodes 21 of the second electrode unit 20 on the first dielectric layer 30 overlaps with the projection of the first electrode 11 or the second electrode 12 of the first electrode unit 10 on the first dielectric layer 30.

For example, the second electrode unit 20 includes 40 strip electrodes 21. The projections of the strip electrodes 21 located in the coordinate cells in the two columns of X=1 and X=7, and the strip electrodes 21 located in the coordinate cells in the two rows of Y=1 and Y=7 in the first dielectric layer 30 overlap with the projections of the second electrodes 12 on the first dielectric layer 30, that is, a total of 24 strip electrodes 21 are arranged in cooperation with the second electrodes 12. The remaining 16 strip electrodes 21 of the second electrode unit 20 are arranged in cooperation with the first electrodes 11 in the same manner.

In one embodiment, the first electrode unit 10 and the second electrode unit 20 can form electric field coupling, thereby forming a mutual capacitive matrix. The mutual capacitive matrix includes a number of coupled mutual capacitances, and the number of coupled mutual capacitances are mainly arranged at the overlapping position between the projections of the first electrode unit 10 and the second electrode unit 20 on the first dielectric layer 30. In one embodiment, a coupled mutual capacitance is formed at the overlapping position between the projection of each strip electrode 21 of the second electrode unit 20 and the projection of the first electrode unit 10 on the first dielectric layer 30.

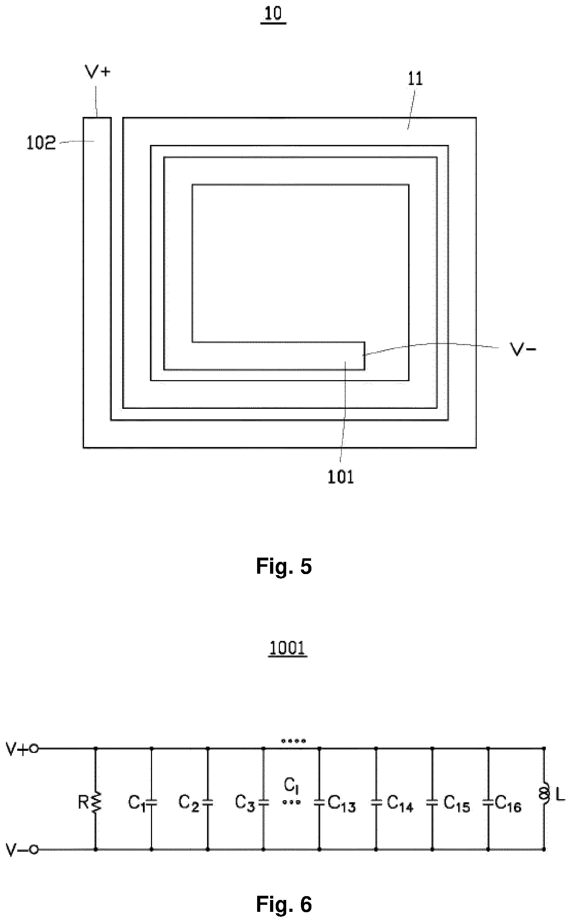

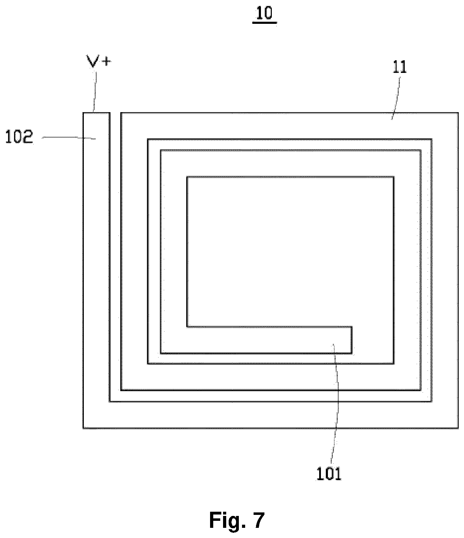

Referring to FIGS. 5 and 7, in one embodiment, the first electrode unit 10 can include two states, namely, a first state (as shown in FIG. 5) and a second state (as shown in FIG. 7). For example, the first electrode unit 10 only includes the first electrode 11. It can be understood that when the first electrode unit 10 includes a number of electrodes, such as multiple first and second electrodes 11 and 12, the first electrodes 11 and the second electrodes 12 function as if connected in series, and the principle is the same as that described below.

Referring to FIG. 5, the first electrode unit 10 in the first state is illustrated. In one embodiment, when opposite excitation signals (e.g., alternating current signals) are applied to the ends of the first electrode unit 10, the first electrode unit 10 is in the first state. For example, negative excitation signals (e.g., an excitation voltage V-) are applied to the first end 101, and positive excitation signals (e.g., an excitation voltage V+) are applied to the second end 102. It can be understood that the positive excitation signals (e.g., the excitation voltage V+) may be applied to either the first or second end 101 or 102. It can be understood that when one end of the first electrode unit 10 being fed with the negative excitation signals and the other end is fed with the positive excitation signals, the first electrode unit 10 forms a current loop.

When the opposite excitation signals are fed into the two ends (e.g., the first end 101 and the second end 102) of the first electrode 11 to form the current loop, if the strip electrodes 21 in the same column of the second electrode unit 20 are connected together, the first electrode unit 10 and the second electrode unit 20 operate as a parallel resonant circuit.

In detail, referring to FIG. 6, a parallel resonant circuit 1001 formed by the first electrode unit 10 and the second electrode unit 20 is illustrated. The parallel resonant circuit 1001 includes a number of equivalent capacitors $C_1$ to $C_i$, an equivalent inductance L, and a resistance R which are connected in parallel. As illustrated in FIG. 6, one end of each of the equivalent capacitances $C_1$ to $C_i$, one end of the equivalent inductance L, and one end of the loss resistance R receive the excitation voltage V+, the other end of each of the equivalent capacitances $C_1$ to $C_i$, the other end of the equivalent inductance L, and the other end of the loss resistance R receive the excitation voltage V-.

It can be understood that a mutual capacitance is formed by the cooperation of the first electrode 11 and the strip electrodes 21 of the second electrode unit 20 (e.g., the second electrode unit 20 is connected in parallel with the first electrode 11) and this constitutes a corresponding equivalent capacitance. For example, as illustrated in FIG. 6, since 16 strip electrodes of the second electrode unit 20 are cooperated with the first electrode 11, the first electrode 11 works with the strip electrodes 21 of the second electrode unit 20 to form 16 equivalent capacitances. In this configuration, the parallel resonant circuit 1001 includes 16 parallel equivalent capacitors, that is, i=16.

In addition, as described above, when the opposite excitation signals are fed into the two ends (e.g., the first end 101 and the second end 102) of the first electrode 11 to form the current loop, that is, when the first electrode unit 10 is in the first state, the first electrode unit 10 is equivalent to an electrified helix body, and a magnetic field is generated around the first electrode unit 10. The direction of the magnetic field of the electrified helix body satisfies the "right-hand screw rule", and the strength of the magnetic field depends on the shape and material of the first electrode unit 10 itself. Thus, the first electrode 11 functions as the equivalent inductance L in the parallel resonant circuit 1001. In one embodiment, the value of the equivalent inductance L can be changed by adjusting the parameters of the first electrode unit 10 (e.g., the number, the shape, and the material of electrodes, etc.).

In detail, the value of the equivalent inductance L can be obtained by the following formula (1):

$$L = \frac{(k \times \mu_0 \times \mu_S \times N^2 \times S)}{l}$$

(formula 1),

the unit of capacitance value is Henry (H), l is the length in meters of the coil (e.g., the first electrode unit 10), k is a Nagaoka coefficient, and k=2R/l, R is a radius. $\mu_0$ is a vacuum permeability, and $\mu_0 = 4\pi \times 10^{-7}$. $\mu_s$ is a relative permeability of the inner magnetic core of the coil (e.g., the first electrode unit 10). N is the number of turns of the coil (e.g., the first electrode unit 10), and S is a cross-sectional area in square meters of the coil (e.g., the first electrode unit 10).

It can be understood that when the first electrode unit 10 includes the first electrodes 11 and the second electrodes 12, the first electrodes 11 and the second electrodes 22 are equivalent to being connected in series, thus, the parallel resonant circuit 1001 can obtain a larger equivalent inductance value L. The loss resistance R of the parallel resonant circuit 1001 is affected by factors such as the shape, the material, and the medium of the first electrode 11 and the strip electrode 21.

It can be understood that the parallel resonant circuit 1001 has a corresponding resonant frequency,

$$\omega_0 = 1/(\sqrt{L \times C_\Sigma})$$

and the resonant frequency and $C_\Sigma = C_1 + C_2 + \cdots + C_i$.

A 3dB bandwidth of the parallel resonant circuit 1001 is obtained by the formula $BW_{3dB} = \omega_0/Q$, and Q is a quality factor of the parallel resonant circuit 1001. A square factor of the parallel resonant circuit 1001 is obtained by the formula $BW_{0.1} = 10 \times BW_{3dB}$.

By configuring the first electrode unit 10 in the first state and forming the parallel resonant circuit 1001 between the first electrode unit 10 and the second electrode unit 20, the mutual capacitive touch-control screen 100 has a function of frequency selection, and can perform energy transfer within a specific range. By adjusting relevant parameters, such as the shape and the material etc. of the first electrode unit 10 and the second electrode unit 20, the energy within a passband can be transferred, and energy outside the passband can be effectively suppressed.

As illustrated in FIGS. 3 and 4, in some embodiments, when the first electrode unit 10 is in the first state, if the strip electrodes 21 in the same row of the second electrode unit 20 are connected together, for example, if the strip electrodes 21 located in the coordinate cells in the two rows of Y=1 and Y=7 are connected together, the first electrode unit 10 and the second electrode unit 20 are also equivalent to a parallel resonance circuit. In other embodiments, when the first electrode unit 10 is in the first state, the strip electrodes 21 in the same row or column cannot be connected together, only the mutual capacitance formed by the cooperation of first electrode unit 10 and the second electrode unit 20 in a form of an array matrix is required. In these embodiments, formula 1 does not establish the value of the equivalent inductance L.

It can be understood that when the first electrode unit 10 (e.g., the first electrode 11) is fed with the excitation signals but does not form the current loop, the first electrode unit 10 is in the second state, and the magnetic field effect of the first electrode unit 10 disappears. In detail, referring to FIG. 7, the first electrode unit 10 in the second state is illustrated. When the first electrode unit 10 is in the second state, the excitation signals are applied to only one of the first end 101 and the second end 102 of the first electrode unit 10. For example, the excitation voltage V+ is only applied to the first end 101, and the second end 102 is suspended. At this time, only a mutual capacitive matrix is formed between the first electrode unit 10 and the second electrode unit 20.

It can be understood that when the mutual capacitive matrix is formed between the first electrode unit 10 and the second electrode unit 20, the first electrode unit 10 can operate as a touch driving electrode, and the second electrode unit 20 can operate as a touch receiving electrode. Alternatively, the second electrode unit 20 can operate as the touch driving electrode, and the first electrode unit 10 can operate as the touch receiving electrode. That is, in this embodiment, the first electrode unit 10 and the second electrode unit 20 form a combination of driving electrodes and receiving electrodes, and the coordinate of the touch point can be obtained by detecting the coupled mutual capacitance between the first electrode unit 10 and the second electrode unit 20. Thus, the function of touch position detection of the mutual capacitive touch-control screen 100 is realized.

Embodiment 2:

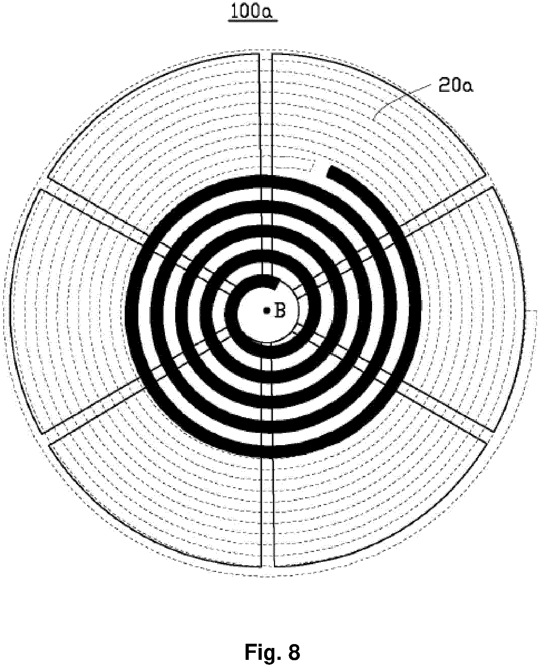

Referring to FIGS. 8 to 10, another mutual capacitive touch-control screen 100a (as shown in FIG. 8) is illustrated. As shown in FIGS. 8 to 10, the structure of the mutual capacitive touch-control screen 100a is similar to that of the mutual capacitive touch-control screen 100, the difference lies in the structure of the first electrode unit 10a being different from that of the first electrode unit 10, and the structure of the second electrode unit 20a being different from that of the second electrode unit 20.

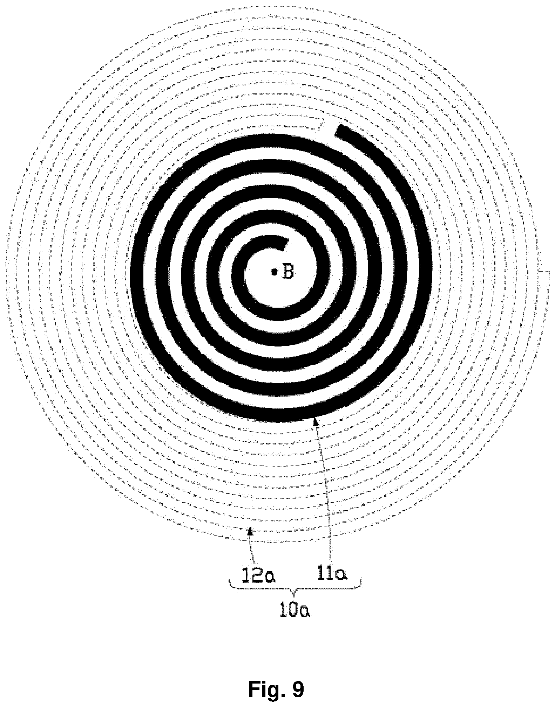

As shown in FIG. 9, in Embodiment 2, the first electrode unit 10a includes first electrodes 11a and second electrodes 12a. The first electrode unit 10a is shaped as a flat spiral. In one embodiment, the first electrode unit 10a extends in an anticlockwise direction from the inside to the outside around a center point (e.g., a point B), and is arranged in an overall concentric shape on the first dielectric layer 30 (as shown FIG. 1). It can be understood that the concentric circle shape is a special case of the shape of flat spiral. The shape of flat spiral may also include an elliptical shape and the like.

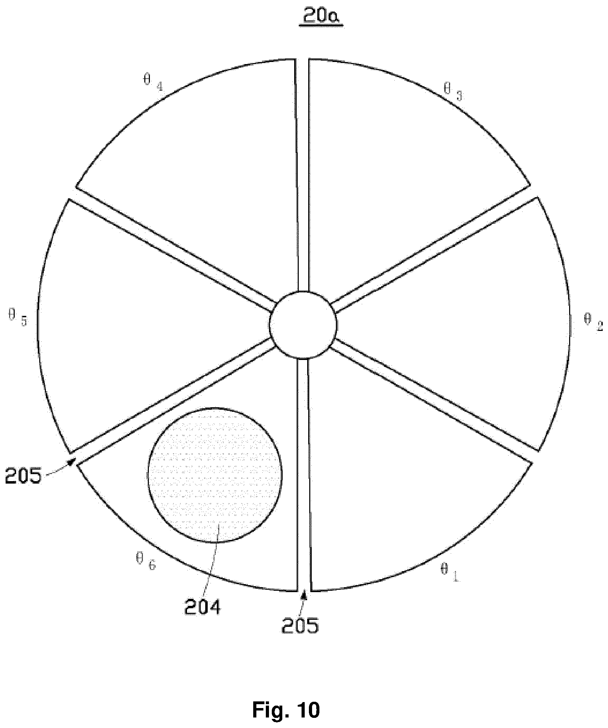

As shown in FIG. 10, the second electrode unit 20a includes a number of azimuth electrodes $\theta_i$, the number of azimuth electrodes $\theta_i$ can be preset according to actual requirement, for example, the number can be six. The shape of the azimuth electrode $\theta_i$ is a shape of whole block. In one embodiment, the azimuth electrode $\theta_i$ is substantially fan-shaped, the azimuth electrode $\theta_i$ extends in a radial direction of the circumference from the geometric center point of the first electrode unit 10a.

In one embodiment, when the first electrode unit 10a is in the second state, that is, when the first electrode unit 10a and the second electrode unit 20a are only providing the touch function, the touch position can be indicated by the polar coordinates through setting the azimuth electrodes $\theta_i$. In detail, the distance between any point on the first electrode unit 10a and the center point B can represent the radius of the polar coordinate, and the azimuth electrode $\theta_i$ where the second electrode unit 20a is located can represent the azimuth angle of the polar coordinate.

It can be understood that when both ends of the first electrode unit 10a formed by the first electrodes 11a and the second electrodes 12a are fed with the excitation signals and form a loop, the inductance will also be formed and the magnetic field effect will be generated. Energy with a specific frequency is then transferred by forming a parallel resonance circuit with the second electrode unit 20a.

Embodiment 3:

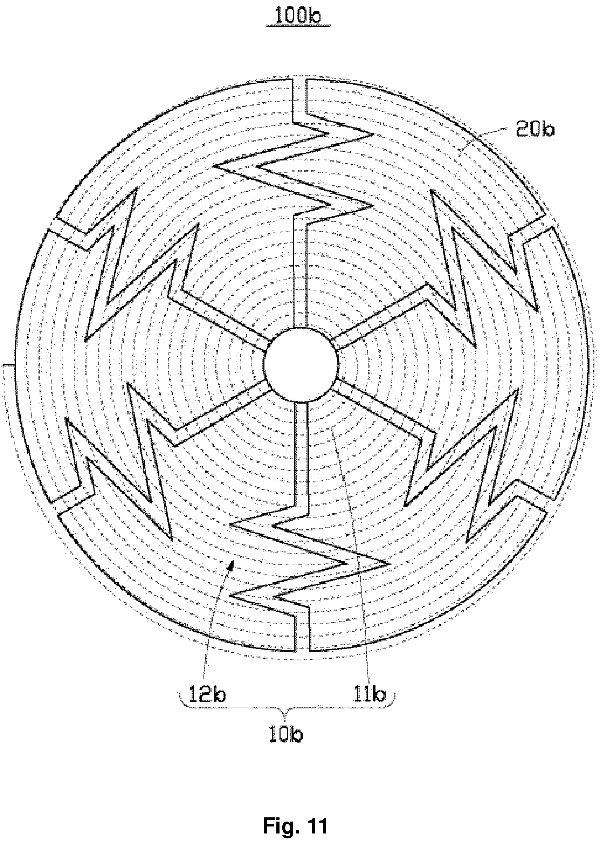

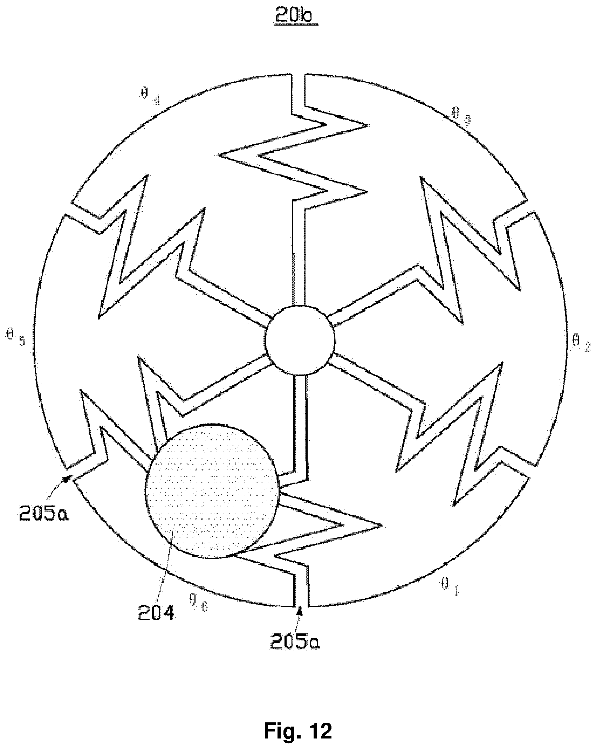

Referring to FIGS. 11 and 12, another mutual capacitive touch-control screen 100b is illustrated. The structure of the mutual capacitive touch-control screen 100b is similar to that of the mutual capacitive touch-control screen 100a. For example, the structure of the first electrode 11b in the first electrode unit 10b is basically the same as the structure of the first electrode 11a in the electrode unit 10a, and the structure of the second electrode 12b in the first electrode unit 10b is basically the same as the structure of the second electrode 12a in the electrode unit 10a. The difference lies in the different structure of the second electrode unit 20b from that of the second electrode unit 20a.

In detail, the shape of the azimuth electrode of the second electrode unit 20b is still a whole block. The edge of the azimuth electrode $\theta_i$ is jagged.

Comparing FIG. 10 with FIG. 12, when the edge of the azimuth electrode $\theta_i$ is set as a straight line as shown in FIG. 10, a straight channel 205 is formed between adjacent electrodes. Taking azimuth electrode $\theta_6$ as an example, when an area corresponding to the azimuth electrode $\theta_6$ is touched by a finger of the user, a touch area 204, as shown in FIG. 10, is formed, the touch area 204 is located in the middle position of the azimuth electrode $\theta_6$. At this time, the touch area 204 is far away from the adjacent electrodes $\theta_5$ and $\theta_6$ on the left and right, the sensitivity of touch sensing is low. When the edge of the azimuth electrode $\theta_i$ is set in a jagged shape as shown in FIG. 12, if the finger is placed at the same position as shown in FIG. 10, the touch area 204 with the same size is formed, since the adjacent channels 205a on the left and right are twisted, the touch area 204 also covers part of the electrodes $\theta_5$ and $\theta_6$. This increases the sensitivity of touch sensing. It can be understood that when the sensitivity of touch sensing increases, the calculation accuracy of the touch position (e.g., angle) will also increase, that is, by setting the azimuth electrodes $\theta_i$ in the jagged shape, the error of angle detection can be reduced.

Embodiment 4:

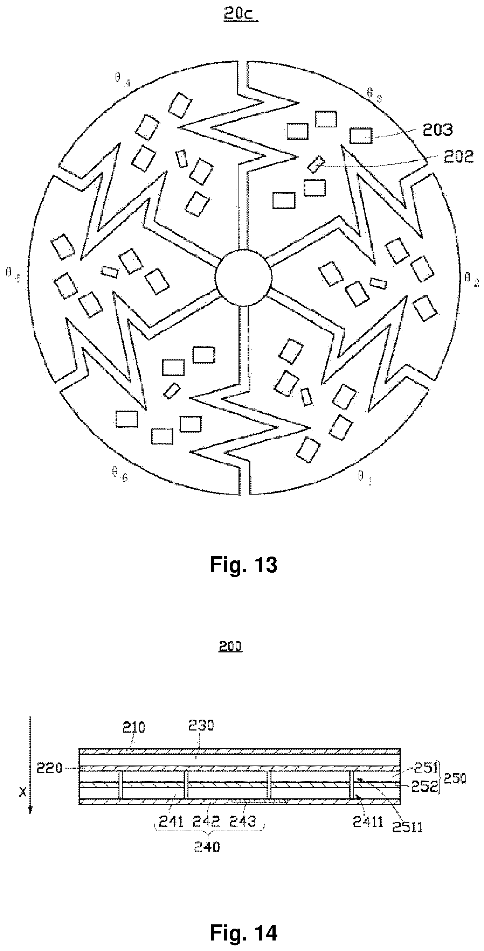

Referring to FIG. 13, another mutual capacitive touch-control screen is illustrated. The structure of the mutual capacitive touch-control screen is similar to that of the mutual capacitive touch-control screen 100b, the difference lies in the different structure of the second electrode unit 20c from that of the second electrode unit 20b.

In detail, the azimuth electrode $\theta_i$ of the second

electrode unit 20c defines a number of openings 202 and slots 203.

It can be understood that, by defining the openings 202 and the slots 203, when the first electrode unit and the second electrode unit 20c form a parallel resonant circuit, and the electromagnetic field penetrates the second electrode unit 20c, the energy transfer efficiency and frequency range can be adjusted.

Embodiment 5:

Referring to FIG. 14, a mutual capacitive touch-control screen 200 is illustrated. The mutual capacitive touch-control screen 200 includes a second electrode unit 210, a first electrode unit 220, a first dielectric layer 230, and a bottom coil layer group 240.

The second electrode unit 210 can operate as a receiving electrode, and the second electrode unit 210 can be the second electrode unit 20/20a/20b/20c in the above-mentioned embodiments. The first electrode unit 220 can operate as an emitting electrode, and the first electrode unit 220 can be the first electrode unit 10/10a/10b in the above-mentioned embodiments. The first dielectric layer 231 can be the first dielectric layer 30 in the above-mentioned embodiments. The second dielectric layer 232 can be made of the same material as the first dielectric layer 231.

The second electrode unit 210 and the first electrode unit 220 are arranged on either side of the first dielectric layer 230. The bottom coil layer group 240 is arranged on one side of the first electrode unit 220.

In one embodiment, the bottom coil layer group 240 includes a bottom dielectric layer 241 and a bottom charging coil 242. The mutual capacitive touch-control screen 200 forms a stacked structure of the second electrode unit 210, the first dielectric layer 230, the second electrode unit 210, the bottom dielectric layer 241, and the bottom charging coil 242, from top to bottom along the X-axis direction. It can be understood that the bottom charging coil 242 can be a wireless charging coil.

In one embodiment, the bottom dielectric layer 241 defines at least one bottom through hole 2411, the first electrode unit 220 is connected with the bottom charging coil 242, and the connection part is located in the bottom through hole 2411. That is, the first electrode unit 220 is connected with the bottom charging coil 242 through the bottom through hole 2411. It can be understood that the first electrode unit 220 can be multiplexed as a charging coil. The first electrode unit 220 and the bottom charging coil 242 can form a charging coil combination, by setting different electrodes in the first electrode unit 220 at different frequency points, the touch-control device can simultaneously transmit energy to external devices corresponding to different frequency points, or receive energy from the external devices, and the external device can transmit and receive the energy simultaneously.

In one embodiment, the mutual capacitive touch-control screen 200 further includes a circuit layer group 250. The line layer group 250 is arranged between the first electrode unit 220 and the bottom coil layer group 240. The circuit layer group 250 includes a circuit dielectric layer 251 and a first wiring 252, and the circuit dielectric layer 251 is arranged above the first wiring 252 (i.e., on the side close to the first electrode unit 220). The first wiring 252 is connected with the first electrode unit 220 and/or the second electrode unit 210 (the connection is not shown in the figures).

In one embodiment, the circuit dielectric layer 251 defines at least one circuit layer through hole 2511, and the circuit layer through hole 2511 is arranged to correspond to the bottom through hole 2411 and is connected with the bottom through hole 2411. In this way, the first electrode unit 220 and the bottom charging coil 242 can be connected in the circuit layer through holes 2511 and the bottom through holes 2411. It can be understood that the circuit layer through holes 2511 and the bottom through holes 2411 can be arranged to avoid the first wiring 252 of the circuit layer group 250.

In one embodiment, the bottom coil layer group 240 further includes a second wiring 243. The second wiring 243 is arranged on the same layer as the bottom charging coil 242. That is, the second wiring 243 and the bottom charging coil 242 are both arranged on the side of the bottom dielectric layer 241 away from the second electrode unit 210. The second wiring 243 is connected with the first electrode unit 220 and/or the second electrode unit 210.

In one embodiment, the first electrode unit 220 or the second electrode unit 210 is selected to be connected with the first wiring 252 or the second wiring 243 according to the wiring distance. For example, when the wiring distance of the first wiring 252 is shorter, the first wiring 252 can be connected with the first electrode unit 220 or the second electrode unit 210. When the wiring distance of the second wiring 243 is shorter, the second wiring 243 can be connected with the first electrode unit 220 or the second electrode unit 210.

It can be understood that, compared with the single-layer configuration (i.e., only the first electrode unit 220 is provided), there is a two-layer configuration of the charging coil, that is, the charging coil is divided into two layers of the first electrode unit 220 and the bottom charging coil 242, the overall impedance of the charging coil is reduced, thus, energy loss of the charging coil itself is reduced, and the output efficiency is improved.

In addition, since the metal layer of the first electrode unit 220 is thin and the heat dissipation capability is weak, the two-layer configuration can transfer the heat of the first electrode unit 220 located on the inner side to the bottom charging coil 242 located on the bottom layer through the connection in the bottom through hole 2411, and such heat is released through the bottom charging coil 242. In this way, the heat generated by the device can be rapidly released, thereby reducing the temperature of the electronic device, and effectively improving the service life of the electronic device.

In one embodiment, the mutual capacitive touch-control screen 200a further includes a cover plate, and the cover plate can be touched for control by the user. It can be understood that the material of the cover plate is not limited here, for example, it can be one of glass plate, mylar plate, film, and the like.

Embodiment 6:

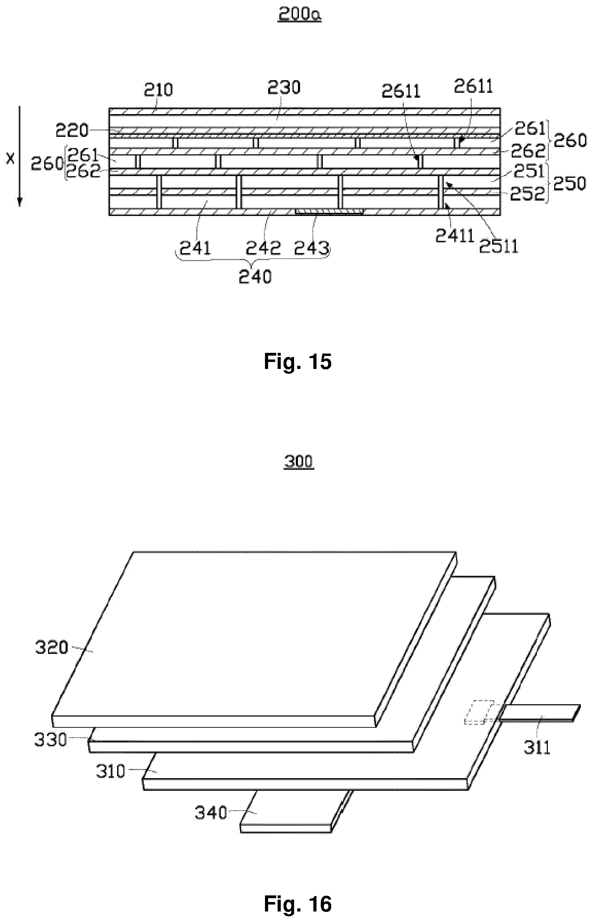

Referring to FIG. 15, a mutual capacitive touch-control screen 200a is provided. The structure of the mutual capacitive touch-control screen 200a is similar to the mutual capacitive touch-control screen 200, the difference is that the mutual capacitive touch-control screen 200a further includes at least one middle coil layer group 260. The middle coil layer group 260 is arranged between the first electrode unit 220 and the bottom coil layer group 240.

The middle coil layer group 260 includes a middle dielectric layer 261 and a middle charging coil 262. The middle dielectric layer 261 in each middle coil layer group 260 is arranged above the middle charging coil 262 (i.e., arranged on the side close to the first electrode unit 220).

Each middle dielectric layer 261 defines at least one middle through hole 2611, the first electrode unit 220 is connected with the middle charging coil 262, and the connection part is located in the middle through hole 2611. That is, the first electrode unit 220 is connected with each middle charging coil 262 through the middle through holes 2611.

In one embodiment, the first electrode unit 220 is connected with the middle charging coil 262 and the bottom charging coil 242 in sequence. In detail, the first electrode unit 220 and the middle charging coil 262 are connected through the middle through hole 2611, and the middle charging coil 262 and the bottom charging coil 242 are connected through the bottom through hole 2411. That is, the first electrode unit 220 is connected with each middle charging coil 262 and the bottom charging coil 242 through each middle through hole 2611 and the bottom through hole 2411.

It can be understood that the number of middle coil layer groups 260 is not limited here, and may be one, two (as shown in FIG. 15 ), or other multiple middle coil layer groups 260. When there is more than one middle coil layer group 260, the middle charging coils 262 of adjacent middle coil layer groups 260 are connected through the middle through holes 2611 of the middle dielectric layer 261 located in the lower layer (i.e., the bottom coil layer group 240).

In one embodiment, the line layer group 250 and the bottom coil layer group 240 are arranged adjacent to each other. In this way, the mutual capacitive touch-control screen 200a forms the top-to-bottom stacked structure of the second electrode unit 210, the first dielectric layer 230, the first electrode unit 220, the middle coil layer group 260, the circuit dielectric layer 251, the first wiring 252, the bottom dielectric layer 241, and the bottom charging coil 242.

It can be understood that no matter how many middle coil layer groups 260 the mutual capacitive touch-control screen 200a there may be, the bottom charging coil 242 is always arranged on the bottommost layer of the mutual capacitive touch-control screen 200a. In this way, heat generated by the inner charging coils (e.g., the first electrode unit 220 and the middle charging coil 262) can be sequentially transferred from the inside to the outside to the bottom charging coil 242 located at the outermost layer, and the heat is released through the bottom charging coil 242.

Embodiment 7:

Referring to FIG. 16, a touch-control device 300 is illustrated. The touch-control device 300 includes a driver chip and a mutual capacitive touch-control screen 310. The mutual capacitive touch-control screen 310 can be the mutual capacitive touch-control screen 100/100a/100b/200/200a in the above-mentioned embodiments.

The mutual capacitive touch-control screen 310 is electrically connected with the driving chip through connecting wires. For example, the connection line may include the first wiring 252 and the second wiring 243 in the above-mentioned embodiment 5 or 6.

In one embodiment, the mutual capacitive touch-control screen 310 of the touch-control device 300 includes a preset area, and the first electrode unit 10/10a/10b/220 and the second electrode unit 20/20a/20b/20c/210 in the preset area form a resonant circuit. That is, not all of the electrode units (e.g., the first electrode units 10/10a/10b/220) can be multiplexed as the charging coil. For example, the mutual capacitive touch-control screen 310 is divided into an upper half area and a lower half area, and only the electrode units located in either the upper half area or the lower half area can be multiplexed as the charging coil.

In one embodiment, the driver chip includes a touch driver chip, a wireless control chip, and a number of switches. The first end of each switch is connected with the first electrode unit 10/10a/10b/220, the second end of each switch is connected with the touch driving chip, and the third end of each switch is connected with the wireless control chip. The first state and the second state of the first electrode unit 10/10a/10b/220 can be switched by the switch.

In one embodiment, the second electrode unit 210, the first dielectric layer 230, the first electrode unit 220, the middle coil layer group 260, the circuit layer group 250, and the bottom coil layer group 240 are all integrated in a printed circuit board (PCB). The touch-control device 300 includes a number of components, and the components include the above-mentioned driving chips, and also include, for example, resistors, capacitors, and the like. These components are arranged on the back side of the above-mentioned printed circuit board.

It can be understood that the mutual capacitive touch-control screen 310 obtains touch information through the amount of the coupling signals between the first electrode unit and the second electrode unit, so as to realize the touch position detection function.

It can be understood that the touch-control device is in a shape of a circle, a quasi-circle, a square, or a square with rounded corners.

In one embodiment, the touch-control device 300 further includes a glass cover plate 320, a back glue 330, and a ferrite 340. The back glue 330 is arranged between the glass cover plate 320 and the mutual capacitive touch-control screen 310 for bonding the glass cover plate 320 and the mutual capacitive touch-control screen 310 together. The ferrite 340 is arranged on a side of the mutual capacitive touch-control screen 310 away from the glass cover plate 320.

It can be understood that the mutual capacitive touch-control screen 310 is further provided with an interface 311, one end of the interface 311 is connected with the wiring on the mutual capacitive touch-control screen 310, and the other end connects with the main board of the electronic device.

Embodiment 8:

An electronic device is further provided. The electronic device includes the touch-control device in the above-mentioned embodiments. The electronic device may be, but limited to, a smart phone, a tablet, a watch, an earphone, a notebook computer, and the like.

By activating the first electrode unit 10/10a/10b/220 in different configurations, and forming a resonance circuit with the second electrode unit 20/20a/20b/20c/210 in the first state, the mutual capacitive touch-control screen 100/100a/100b/200/200a can realize the frequency selection function, and the touch-control device in the electronic device can dynamically switch the resonant circuit formed by the first electrode unit 10/10a/10b/220 and the second electrode unit 20/20a/20b/20c/210 to the preset frequency point, so as to transmit or receive energy to or from the external devices at the same frequency point. Further, the first electrode unit 10/10a/10b/220 is provided with a number of electrodes (e.g., the first electrode and the second electrode), and different electrodes can be set at different frequency points, thus, the touch-control device can transmit or receive energy with the external device corresponding to different frequency points at the same time, and the external device transmits and receives energy at the same time. Under the second state, the combination of the driving electrode and the receiving electrode is formed by the first electrode unit 10/10a/10b/220 and the second electrode unit 20/20a/20b/20c/210, thereby realizing the touch position detection function. In this way, the touch position detection function and the energy transmission function are realized at the same time.

When the first electrode unit 10/10a/10b/220 is in the first state, wireless charging, near field communication (NFC), as well as amplitude modulation (AM), frequency modulation (FM), wireless Intercom, BLUETOOTH, WIFI and other communication functions can be realized.

Those skilled in the art should recognize that the above embodiments are merely illustrative of the present disclosure, and not intended to limit the present disclosure, any appropriate modifications and variations made to the above embodiments within the spirit and scope of the present application should fall within the scope of protection of the present disclosure.

**Claims**

1. A mutual capacitive touch-control screen, **characterized in that**, the mutual capacitive touch-control screen comprises:

    a first dielectric layer comprising a first surface and a second surface, the first surface and the second surface being arranged opposite to each other;
    a first electrode unit arranged on the first surface of the first dielectric layer; and
    a second electrode unit arranged on the second surface of the first dielectric layer and cooperated with the first electrode unit to form a coupling mutual capacitance;
    wherein the first electrode unit comprises a first state and a second state, when the first electrode unit is in the first state, the first electrode unit and the second electrode unit form a combination of driving electrode and receiving electrode, and a coordinate of a touch point is obtained by detecting the coupling mutual capacitance between the first electrode unit and the second electrode unit;
    when the first electrode unit is in the second state, the first electrode unit and the second electrode unit form a resonance circuit.

2. The mutual capacitive touch-control screen according to claim **1, characterized in that**, the first electrode unit comprises a first end and a second end; when excitation signals are applied to the first end and the second end, the first electrode unit is in the first state; when the excitation signals are applied to the first end or the second end, the first electrode unit is in the second state.

3. The mutual capacitive touch-control screen according to claim 1, **characterized in that**, when the first electrode unit is in the first state, an equivalent capacitance is formed at each overlapping position between a projection of the first electrode unit on the first dielectric layer and a projection of the second electrode unit on the first dielectric layer, the first electrode unit forms an equivalent inductance, the resonance circuit is formed by a plurality of equivalent capacitances being in parallel with the equivalent inductance.

4. The mutual capacitive touch-control screen according to claim 1, **characterized in that**, the first electrode unit comprises a first electrode and a second electrode, a switch is arranged between the first electrode and the second electrode, the first electrode is connected or disconnected with the second electrode by the switch.

5. The mutual capacitive touch-control screen according to claim 1, **characterized in that**, the first electrode extends in a direction around a center point, and is arranged in a rectangular shape, the second electrode unit comprises a plurality of strip electrodes.

6. The mutual capacitive touch-control screen according to claim 1, **characterized in that**, the first electrode unit is in a spiral shape, the second electrode unit comprises a plurality of azimuth electrodes, and each of the plurality of azimuth electrodes is in a shape of whole block.

7. The mutual capacitive touch-control screen according to claim 6, **characterized in that**, the first electrode unit is in a concentric circle shape, the azimuth electrode is in a fan shape, and extends along a radial direction of a circumference.

8. The mutual capacitive touch-control screen according to claim 6 or 7, **characterized in that**, the first electrode unit is in a concentric circle shape, and an edge of the azimuth electrode is in a jagged shape.

9. The mutual capacitive touch-control screen according to claim 6, **characterized in that**, the azimuth electrode defines a plurality of openings and slots.

10. The mutual capacitive touch-control screen according to claim 5, **characterized in that**, the strip electrode is axisymmetric with a center line as an axis of symmetry, and shaped as two letters "H" joined at one side, opposite two sides of the strip electrode each defines openings, directions of the openings of the plurality of strip electrodes are the same.

11. The mutual capacitive touch-control screen according to claim 1, **characterized in that**, the mutual capacitive touch-control screen further comprises:

a bottom coil layer group formed by a bottom dielectric layer and a bottom charging coil;
wherein the mutual capacitive touch-control screen forms a stacked structure of the second electrode unit, the first dielectric layer, the first electrode unit, the bottom dielectric layer, and the bottom charging coil,
the bottom dielectric layer defines at least one bottom through hole, and the first electrode unit is connected with the bottom charging coil through the bottom through hole.

12. The mutual capacitive touch-control screen according to claim 11, **characterized in that**, the mutual capacitive touch-control screen further comprises:

at least one middle coil layer group comprising a middle dielectric layer and a middle charging coil;
wherein the middle coil layer group is arranged between the first electrode unit and the bottom coil layer group, the middle dielectric layer in each middle coil layer group is arranged above the middle charging coil;
each middle dielectric layer defines at least one middle through hole, and the first electrode unit is connected with the middle charging coil and the bottom charging coil through the middle through hole and the bottom through hole.

13. The mutual capacitive touch-control screen according to claim 11 or 12, **characterized in that**, the mutual capacitive touch-control screen further comprises:

a circuit layer group comprising a circuit dielectric layer and a first wiring;
wherein the circuit dielectric layer is arranged above the first wiring, the circuit layer group and the bottom coil layer group is adjacent, and the circuit layer is arranged above the bottom coil layer; the first wiring is connected with the first electrode unit and/or the second electrode unit.

14. The mutual capacitive touch-control screen according to claim 13, **characterized in that**, the bottom coil layer group further comprises a second wiring, and the second wiring is arranged on a same layer as the bottom charging coil;
the second wiring is connected with the first electrode unit and/or the second electrode unit.

15. The mutual capacitive touch-control screen according to claim 14, **characterized in that**, the second electrode unit, the first dielectric layer, the first electrode unit, the middle coil layer group, and the bottom coil layer group are integrated in a printed circuit board.

**16.** The mutual capacitive touch-control screen according to claim 1, **characterized in that**, the mutual capacitive touch-control screen further comprises: a cover plate arranged on a side of the second electrode unit that is far away from the first dielectric layer.

**17.** A touch-control device, **characterized in that**, the touch-control device comprises:

> a driver chip; and
> a mutual capacitive touch-control screen in any one of claims 1 to 16 electrically connected with the driving chip.

**18.** The touch-control device according to claim 17, **characterized in that**, the touch-control device dynamically switches a resonant circuit formed by a first electrode unit and a second electrode unit to a preset frequency point, and transmits or receives energy with an external device at a same frequency point.

**19.** The touch-control device according to claim 18, **characterized in that**, the first electrode unit comprises a plurality of electrodes, the touch-control device sets different electrodes in the first electrode unit at different frequency points, and transmits or receives the energy with the external device corresponding to the different frequency points at the same time.

**20.** The touch-control device according to claim 17, **characterized in that**, the first electrode unit and the second electrode unit in a preset area of the mutual capacitive touch-control screen form the resonant circuit.

**21.** The touch-control device according to claim 17, **characterized in that**, the driver chip comprises a touch driver chip, a wireless control chip, and a plurality of switches, a first end of each of the plurality of switches is connected with the first electrode unit, a second end of each of the plurality of switches is connected with the touch driving chip, and a third end of each of the plurality of switches is connected with the wireless control chip, a first state and a second state of the first electrode unit are switched by each of the plurality of switches.

**Fig. 1**

**Fig. 2**

20

201

21

201

Fig. 3

**Fig. 4**

10

V+

102

11

V−

101

**Fig. 5**

1001

V+ o

R  C₁  C₂  C₃  C_I  C₁₃  C₁₄  C₁₅  C₁₆  L

V− o

**Fig. 6**

<u>10</u>

V+

102

11

101

**Fig. 7**

100a

20a

B

Fig. 8

**Fig. 9**

## 20a

**Fig. 10**

**Fig. 11**

20b

$\theta_4$  $\theta_3$

$\theta_5$  $\theta_2$

205a

204  $\theta_6$  $\theta_1$

205a

**Fig. 12**

20c

θ$_4$  θ$_3$

203

202

θ$_5$  θ$_2$

θ$_6$  θ$_1$

# Fig. 13

200

210  230

220

X

241 242 243  2411 2511

240

251
252  250

# Fig. 14

200a

**Fig. 15**

300

**Fig. 16**

## INTERNATIONAL SEARCH REPORT

| | International application No. |
|---|---|
| | **PCT/CN2023/080180** |

**A. CLASSIFICATION OF SUBJECT MATTER**

G06F 3/044(2006.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 触控, 触摸, 电容, 电极, 第一, 第二, 介质, 坐标, 谐振, 状态, 切换, 投影, 开关, touch, capacitance, electrode, first, second, medium, coordinates, resonance, state, switch, projection

**C. DOCUMENTS CONSIDERED TO BE RELEVANT**

| Category* | Citation of document, with indication, where appropriate, of the relevant passages | Relevant to claim No. |
|---|---|---|
| PX | CN 115167712 A (DUNTAI ELECTRONICS (SHENZHEN) CO., LTD.) 11 October 2022 (2022-10-11)<br>claims 1-13 | 1-10, 17-19 |
| PX | CN 115617212 A (DUNTAI ELECTRONICS (SHENZHEN) CO., LTD.) 17 January 2023 (2023-01-17)<br>claims 1-21 | 1-21 |
| X | KR 20170053576 A (MODA-INNOCHIPS CO., LTD.) 16 May 2017 (2017-05-16)<br>description, paragraphs 45-80 | 1-2, 5-10, 16-17, 20 |
| A | CN 113946242 A (SHENZHEN GOODIX TECHNOLOGY CO., LTD.) 18 January 2022 (2022-01-18)<br>entire document | 1-21 |
| A | US 2016062519 A1 (SAMSUNG ELECTRONICS CO., LTD.) 03 March 2016 (2016-03-03)<br>entire document | 1-21 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 May 2023** | **31 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/080180**

| Patent document cited in search report | | | Publication date (day/month/year) | Patent family member(s) | | | Publication date (day/month/year) |
|---|---|---|---|---|---|---|---|
| CN | 115167712 | A | 11 October 2022 | None | | | |
| CN | 115617212 | A | 17 January 2023 | None | | | |
| KR | 20170053576 | A | 16 May 2017 | KR | 101885665 | B1 | 06 August 2018 |
| CN | 113946242 | A | 18 January 2022 | None | | | |
| US | 2016062519 | A1 | 03 March 2016 | EP | 2998834 | A2 | 23 March 2016 |
| | | | | EP | 2998834 | A3 | 18 May 2016 |
| | | | | EP | 2998834 | B1 | 22 January 2020 |
| | | | | WO | 2016032245 | A1 | 03 March 2016 |
| | | | | US | 10379694 | B2 | 13 August 2019 |

Form PCT/ISA/210 (patent family annex) (July 2022)